Europäisches Patentamt

European Patent Office

Office européen des brevets

(19)

(11) **EP 0 537 641 B1**

(12) **EUROPÄISCHE PATENTSCHRIFT**

(45) Veröffentlichungstag und Bekanntmachung des Hinweises auf die Patenterteilung:
**10.04.1996 Patentblatt 1996/15**

(51) Int Cl.$^6$: **G01B 11/00**

(21) Anmeldenummer: **92117289.6**

(22) Anmeldetag: **09.10.1992**

(54) **Verfahren zur Messung der effektiven Momentanposition eines von einem Schlitten getragenen Tastelementes bzw. Werkzeugs**

Method for determining the instantaneous effective position of a probe or a tool supported by a carrier

Procédé pour la détermination de la position effective instantanée d'un capteur ou d'un outil, porté par un chariot

(84) Benannte Vertragsstaaten:
**DE FR GB IT NL**

(30) Priorität: **17.10.1991 DE 4134371**

(43) Veröffentlichungstag der Anmeldung:
**21.04.1993 Patentblatt 1993/16**

(73) Patentinhaber:
- **Firma Carl Zeiss**
  **D-73446 Oberkochen (DE)**
  Benannte Vertragsstaaten:
  **DE FR IT NL**
- **CARL-ZEISS-STIFTUNG,**
  **HANDELND ALS CARL ZEISS**
  **D-73446 Oberkochen (DE)**
  Benannte Vertragsstaaten:
  **GB**

(72) Erfinder:
- **Breyer, Karl-Hermann, Dr.**
  **W-7920 Heidenheim (DE)**
- **Aubele, Eugen**
  **W-7926 Böhmenkirch (DE)**
- **Ebersbach, Peter, Dr.**
  **W-7087 Essingen (DE)**
- **Grupp, Günter**
  **W-7926 Böhmenkirch (DE)**
- **Wiedmann, Wolfgang**
  **W-7080 Aalen (DE)**

(56) Entgegenhaltungen:
EP-A- 0 309 094          DE-A- 2 950 926
GB-A- 2 159 941

## Beschreibung

Insbesondere bei Koordinatenmeßmaschinen vom Portaltyp, deren Portal in der Regel einseitig von einem Antrieb angetrieben wird, der an einem der beiden Portalfüße angreift, tritt häufig das Problem auf, daß sich das Portal im Zuge von Beschleunigungs- bzw. Abbremsbewegungen aufgrund der dynamisch auf es einwirkenden Kräfte querstellt bzw. Drehschwingungen um die Vertikale ausführt. Obwohl die Amplitude dieser Bewegungen relativ klein ist, hat dies Fehlmessungen zur Folge, da die Position des vom Portal getragenen Tastelementes dann nicht genau bestimmt ist. Denn die Position des Portals wird in der Regel durch Meßwertgeber im angetriebenen Fuße des Portals bestimmt, die einen entlang der Führung angeordneten Maßstab abtasten.

Zur Lösung des beschriebenen Problems ist aus der DE-AS 22 48 194 bereits bekannt geworden, zwei parallele Maßstäbe beidseitig des Portals anzuordnen. Durch Differenzbildung der beiden beabstandet gewonnenen Meßwerte läßt sich das Ausmaß der Drehbewegung des Portals erfassen und die exakte Position des Tastelementes unter Berücksichtigung der Position des auf dem Portal senkrecht zu ihm verfahrbaren Querschlittens berechnen. Das gleiche ist in der DE-OS 2 950 926 in verallgemeinerter Form für Koordinatenmeßgeräte beliebiger Bauform und in der EP 0 309 094 A1 für einen Präzisionstisch beschrieben.

Diese bekannte Lösung hat mehrere Nachteile. Da die Position der beiden Portalfüße gleichzeitig absolut bestimmt wird, werden auf beiden Seiten des Portals zwei gleichwertige, hochgenaue Meßsysteme benötigt, die außerdem beide an einen stabilen Bezugspunkt angebunden sein müssen.

Insoweit inkrementale Längenmeßsysteme verwendet sind, ist es außerdem erforderlich, bezogen auf den vorgenannten Bezugspunkt an beiden Maßstäben Referenzmarken vorzusehen, damit die Meßsysteme immer wieder neu initialisiert werden können.

Da nun außerdem innerhalb der Maschine Temperaturgradienten auftreten können, sind die Temperatureinflüsse auf die beiden Maßstäbe nicht gleich. Somit sind verglichen mit der Messung durch einen einzigen Maßstab die doppelte Anzahl von Temperatursensoren an den Maßstäben erforderlich und die rechnerische Korrektur der Temperatureinflüsse ist sehr aufwendig.

Es ist die Aufgabe der vorliegenden Erfindung, den Einfluß der vorstehend beschriebenen Drehbewegungen auf die Position des Tastelementes zu eliminieren jedoch mit möglichst geringem apparativem bzw. meßtechnischem Aufwand.

Es ist klar, daß die vorstehend beschriebene Problematik nicht nur bei Koordinatenineßinaschinen sondern auch bei Bearbeitungsmaschinen auftreten kann, wobei es dort um die Position des von der Maschine positionierten Werkzeugs geht, und insofern die Erfindung auch für andere Anwendungsfälle nutzbar ist.

Gelöst wird die vorstehend genannte Aufgabe mit dem im Anspruch 1 angegebenen Verfahren bzw. durch einen Aufbau der Maschine gemäß den im Anspruch 9 angegebenen Merkmalen.

Da gemäß der Erfindung das zweite Längenmeßsystem nur zur dynamischen Korrektur verwendet wird, die Genauigkeit der Messung der Absolutposition mit diesem Meßsystem für das Verfahren also keine Rolle spielt, kann an dieser Stelle ein einfaches Meßsystem einer geringeren Genauigkeitsklasse eingesetzt werden und es ist nur ein hochwertiges Meßsystem auf der anderen Seite des Schlittens erforderlich. Beispielsweise kann als Längenmeßsystem der höheren Genauigkeitsklasse auf der einen Seite des Schlittens ein temperaturinvarianter Zerodurmaßstab oder ein Laserinterferometer mit hochgenau stabilisierter Wellenlänge und einer Einrichtung zur Kompensation der Umweltparameter wie Luftdruck und Temperatur auf die Wellenlänge im Bereich der Meßstrecke eingesetzt werden.

Das andere Längenmeßsystem kann beispielsweise ein einfacher Glasmaßstab oder ein Diodenlaser-Interferometer mit einfacher Wellenlängenstabilisierung und ohne Umweltkompensation sein. Das ist möglich, weil für die Referenzpunkte der Längenmeßsysteme keine Langzeitstabilität im Mikrometerbereich notwendig ist und auch das Anbinden beider Längenmeßsysteme an einen gemeinsamen Referenzpunkt nicht erforderlich ist. Jedoch läßt sich das erfindungsgemäße Korrekturverfahren auch mit zwei gleichartigen Längenmeßsystemen durchführen.

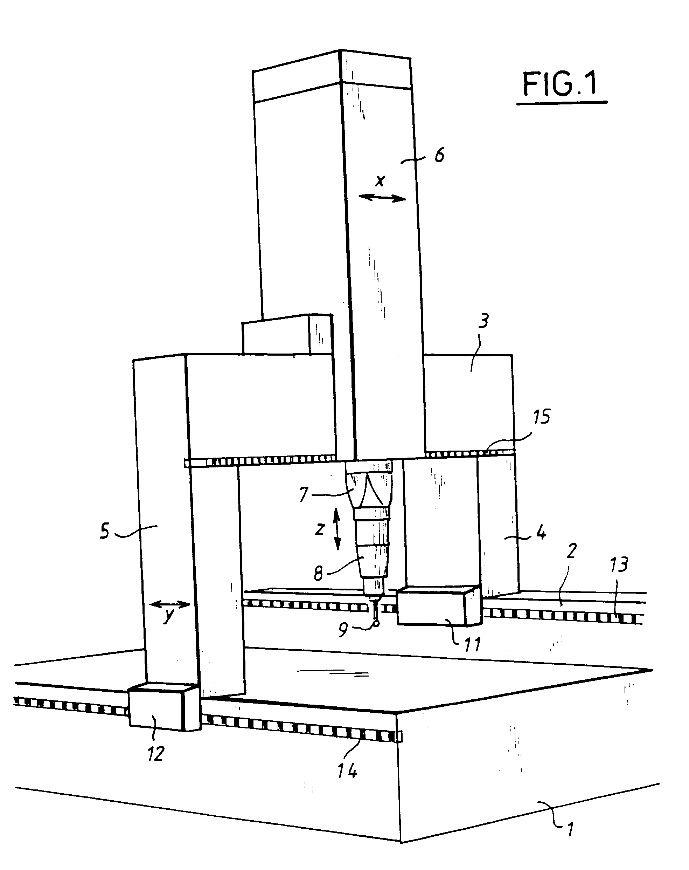

Weitere Vorteile der Erfindung ergeben sich aus der nachfolgenden Beschreibung eines Ausführungsbeispiels anhand der Figuren 1-4 der beigefügten Zeichnungen.

| | |
|---|---|
| Figur 1 | ist eine perspektivische Prinzipskizze eines Koordinatenmeßgerätes vom Portaltyp mit Längenmeßsystemen gemäß der Erfindung; |
| Figur 2 | ist eine schematisierte Aufsicht auf die Maßstäbe des Koordinatenmeßgerätes aus Figur 1 zur Verdeutlichung der geometrischen Zusammenhänge; |
| Figur 3a, 3b u. 3c | sind typische Funktionsverläufe für den Differenzmeßwert (Ys-Ym) gemessen mit den beiden Maßstäben (13) und (14) aus Figur 2; |
| Figur 4 | ist eine schematisierte Seitenansicht des Koordinatenmeßgerätes aus Figur 1 zur Verdeutli- |

chung der geometrischen Zusammenhänge bei Torsionsschwingungen des Querträgers.

Das in Figur 1 dargestellte Koordinatenmeßgerät besitzt einen Meßtisch (1) aus z.B. Granit, auf den an einer Seite eine Führung (2) für das längs des mit (Y) bezeichneten Pfeils verschiebbare Portal angebaut ist. Das Portal besteht aus den beiden Portalfüßen (4) und (5) und dem darübergelegten Querträger (3), auf dem senkrecht zur Führungsrichtung (Y) für das Portal ein Querschlitten (6) in Richtung des mit (X) bezeichneten Pfeils verschieblich gelagert ist. Der Querschlitten (6) enthält die Führungen für die vertikal in Z-Richtung verschiebbare Pinole (7), an dessen unterem Ende der eigentliche Meßkopf (8) des Koordinatenmeßgerätes mit seinen Tastelementen (9) befestigt ist.

Das Portal des Koordinatenmeßgerätes wird einseitig an seinem Fuße (4) angetrieben. Am Fuß (4) ist auch der photoelektrische Lesekopf (11) angeordnet, der einen ersten, hochgenauen, temperaturinvarianten Zerodurmaßstab (13) abtastet, der parallel zur Führung (2) angeordnet ist.

Der Maßstab (13) und der Lesekopf (11) sind üblicherweise im Inneren der Führungsgehäuses (2) angeordnet und durch geeignete Faltenbälge etc. gegen Verschmutzung bzw. Einstauben geschützt.

An dem zweiten Portalfuß (5) ist ein weiterer photoelektrischen Lesekopf (12) befestigt, der einen zweiten, ebenfalls längs der Verschieberichtung (Y) angeordneten inkrementalen Maßstab (14) abtastet. Bei dem Maßstab (14) handelt es sich um einen einfachen Glasmaßstab ohne irgendwelche Temperatursensoren. Entsprechend kann sich der Maßstab dann, wenn an dieser Stelle die Temperatur wechselt, bzw. Temperaturgradienten auftreten, dehnen und stauchen. Verglichen mit dem temperaturinvarianten Maßstab (13) hat er deshalb durchaus einen davon abweichenden Maßstabsfaktor, der außerdem über die Länge des Maßstabs nicht konstant zu sein braucht.

Der Maßstab, mit dem die Verlagerung des Querschlittens (6) entlang des Querträgers (3) des Portals gemessen wird, ist in der Figur mit (15) bezeichnet.

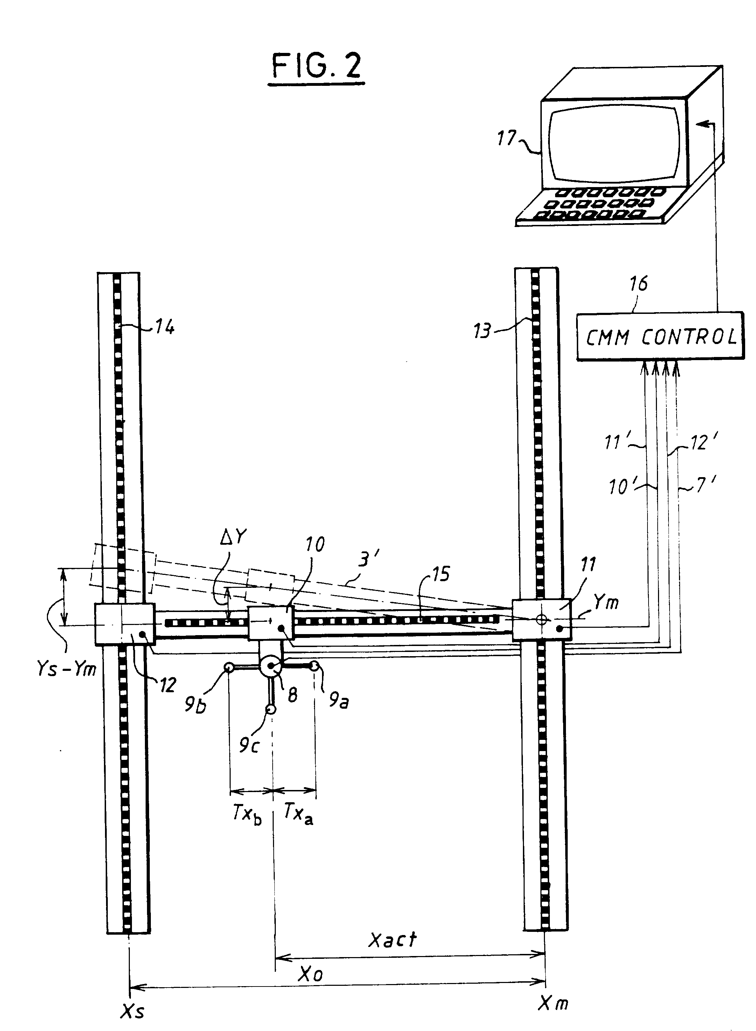

Wie aus der vereinfachten Skizze nach Figur 2 hervorgeht, sind die photoelektrischen Gebersysteme (11) und (12), von denen die Maßstäbe (13) und (14) abgetastet werden, sowie das Gebersystem (10), das den Y-Maßstab (15) abtastet, und auch der hier nicht dargestellte Abtastkopf für den Z-Maßstab an die Maschinensteuerung (16) des Koordintenmeßgerätes angeschlossen. Die Maschinensteuerung (16) empfängt ihre Steuerbefehle vom Rechner (17) des Koordinatenmeßgerätes, und meldet die von der Steuerung aus den Signalen der Leseköpfe abgeleiteten Positionsmeßwerte an den Rechner (17) weiter. An die Steuerung ist weiterhin auch der Meßkopf (8) des Koordinatenmeßgerätes angeschlossen, der den Kontakt der Tastelemente (9a-c) mit dem zu vermessenden Werkstück mit Hilfe geeigneter Sensoren meldet.

Üblicherweise wird der Antrieb des Portals, wenn dieses sich mit dem Meßkopf (8) auf das zu vermessende Werkstück hin bewegt, kurz vor dem Erreichen der Antastposition vom Eilgang auf eine definierte konstante, in der Regel niedrigere Antastgeschwindigkeit heruntergebremst. Während dieses Vorgangs kann das Portal in Schwingungen geraten, wie das in übertriebener Weise gestrichelt dargestellt ist. Die Amplitude dieser Schwingungen ist naturgemäß zwar sehr klein, sie liegt im Bereich weniger um, sie bestimmt jedoch die Meßgenauigkeit des Gerätes, denn um diese Amplitude ist die Position des Tastelementes beim Antastvorgang unbestimmt.

Zur Eliminierung dieser Meßunsicherheit wird folgendermaßen vorgegangen:

Mit dem rechten hochgenauen Maßstab (13) aus Zerodur wird die Position des Portals dauernd und absolut gemessen. Die entsprechenden Meßwerte werden im Maschinentakt aufgenommen und in einem Zwischenspeicher in der Maschinensteuerung abgelegt.

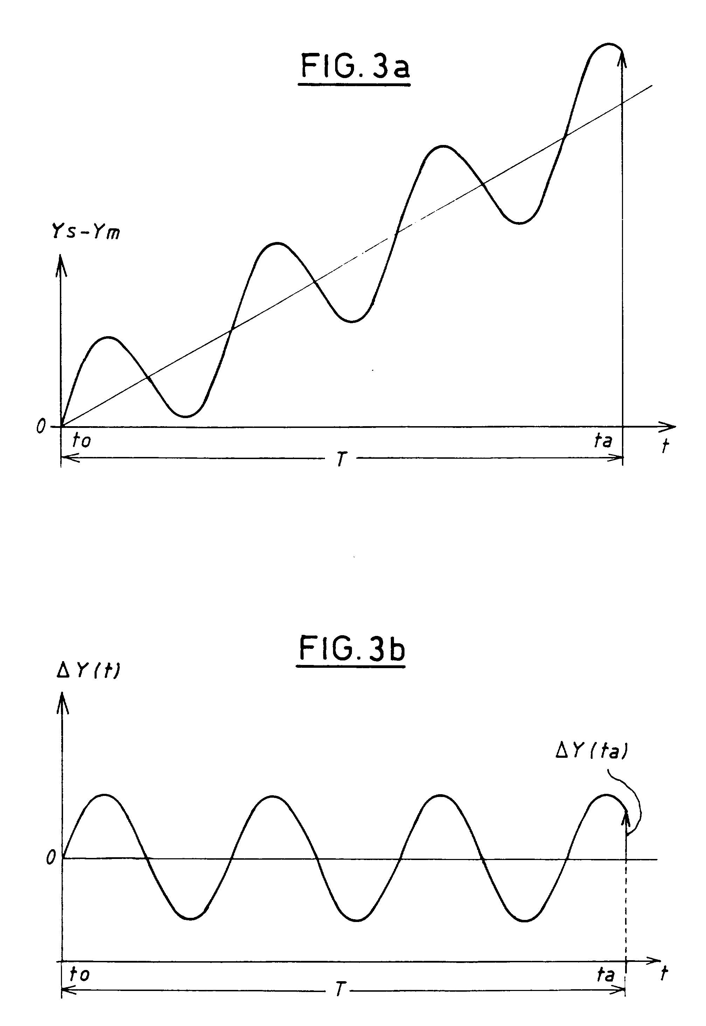

Gleichzeitig wird auch der linke, weniger genaue Maßstab (14) gelesen, allerdings erst eine relativ kurze Zeitspanne beginnend zu einem Zeitpunkt (t0) ca. 1 Sekunde vor dem Antastzeitpunkt, bei dem eines der Tastelemente (9a-c) das zu vermessende Werkstück berührt und den sogenannten Antastimpuls erzeugt. Jedoch wird der Startwert der Positionsmessung mit dem Maßstab (14) durch den mit dem rechten Maßstab (13) ermittelten Positionswert ersetzt und nachfolgend, d.h. während der Zeitspanne vor dem Antastvorgang, werden lediglich die Differenzen (Ys-Ym) der beiden Meßwerte (Ym) des rechten Maßstabs (13) und des Meßwertes (Ys) des linken Maßstabs (14), ebenfalls im Maschinentakt gelesen und abgespeichert. Über die Zeit gesehen, von dem Zeitpunkt (t0) ab, an dem erstmalig die Differenzmeßwerte gelesen bzw. gebildet wurden, bis zu dem Antastzeitpunkt (ta) ergeben diese Meßwertdifferenzen (Ys-Ym) der beiden Maßstäbe einen Funktionsverlauf wie er in Figur 3a vereinfacht dargestellt ist. Der Drehschwingung des Portals um die Vertikale ist hier in erster Näherung eine Gerade überlagert, bedingt durch die leicht unterschiedlichen Maßstabsfaktoren der beiden Maßstäbe (13) und (14), mangelnde Parallelität der beiden Maßstäbe (13) und (14), usw.. Die Steigung dieser Geraden ist stark überhöht dargestellt.

Diese Steigung kann man durch eine geeignete Rechenvorschrift eliminieren, indem beispielsweise der gespeicherte Funktionsverlauf der Differenzmeßwerte (Ys-Ym) durch eine Gerade approximiert wird und diese Gerade von den Meßwerten abgezogen wird. Die so korrigierten Meßwerte $\Delta Y$ (t) besitzen dann den in Figur 3b dargestellten Funktionsverlauf, wobei der mit $\Delta Y$ (ta) bezeichnete Pfeil die dynamische Abweichung darstellt, um die der linke Portalfuß sich im Antastzeitpunkt gegenüber dem rechten Portalfuß verlagert hat.

Dieser Wert ist jedoch nicht mit dem Korrekturwert $\Delta Y$ identisch, um den sich der Tastkopf bzw. das betreffende Tastelement aufgrund der Drehschwingung des Portals von der mit dem Maßstab (13) zu messenden Position verlagert hat. Das Ausmaß dieser Verlagerung ΔY hängt vielmehr von der X-Position des Querschlittens (6) senkrecht zur Fahrrichtung des Portals ab. Beispielsweise bestimmt sich die Verlagerung des Tastelementes (9a) in Y-Richtung nach der Formel

$$\Delta Y9a = \frac{(Xact + TXa) \cdot \Delta Y \ (ta)}{X0} \tag{1}$$

Hierbei ist (X0) der Abstand der beiden Maßstäbe (13) und (14), deren Positionen jeweils mit (Xm) und (Xs) bezeichnet sind, (Xact) die momentan gemessene X-Position des Meßkopfes (8) und (TXa) die Tasterkoordinate für das Tastelement (9a) bezogen auf die X-Position des Meßkopfes.

Diese Beziehung läßt sich sehr leicht anhand der geometrischen Beziehungen (Strahlensatz) ableiten.

Der exakte Meßwert der Y-Position für das Tastelement (9a) zum Antastzeitpunkt wird vom Rechner (17) entsprechend der angegebenen Formel aus den beiden Meßwerten, nämlich dem absoluten Positionsmeßwert (Ym) gemessen mit dem Maßstab (13) und dem dynamischen Differenzmeßwert (Y), sowie der gemessenen X-Position (Xact) berechnet.

Wie bereits einleitend ausgeführt ist bei dieser Methode es nicht erforderlich, daß der linke Maßstab (14) über einen gemeinsamen Referenzpunkt an den rechten Maßstab (13) angebunden ist und auch auf seinen Maßstabsfaktor und seine Temperaturabhängigkeit kommt es nicht an, da beide im Zuge des beschriebenen Auswerteverfahrens nicht in die Genauigkeit eingehen.

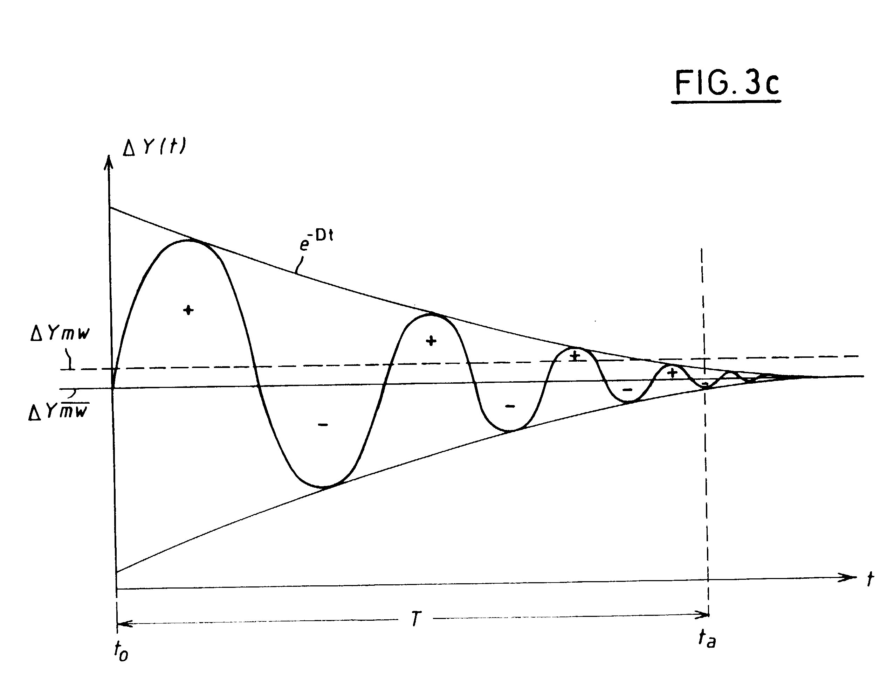

Mit dem vorstehend anhand von Figur 2 und 3 beschriebenen relativ einfachen Korrekturverfahren auf der Basis der Rechenvorschrift gemäß Gleichung (1) läßt sich die Meßunsicherheit eines Koordinatenmeßgerätes bereits deutlich verringern. Eine weitere Reduzierung der Meßunsicherheit kann durch folgende Maßnahmen erreicht werden:

**a) Gewichtete Mittelwertbildung**

Das Abspeichern der Differenzen (Ys - Ym) der beiden Meßwerte des rechten Maßstabs (13) und des linken Maßstabs (14) während eines vorgegebenen Zeitfensters (T), in dem der Antastzeitpunkt (ta) liegt, und die Subtraktion einer approximierten Geraden wie vorstehend beschrieben stellt eine relativ einfache Mittelwertbildung dar, die dann keine optimalen Ergebnisse liefert, wenn die Drehschwingung des Portals aufgrund ihrer Dämpfung innerhalb des Zeitfensters (T) bereits merklich abklingt. Das ist aber oft der Fall, da diese Portalschwingungen nur kurzzeitig, beim Anfahren bzw. Abbremsen des Portals angeregt werden. Legt man zur Mittelwertbildung durch diese Positionsmeßwerte in Form einer gedämpften Schwingung zur Mittelwertbildung eine Gerade wie das in Figur 3c skizziert ist, und benutzt als Kriterium für die Lage dieser Gerade die Bedingung, daß die Summe der quadratischen Abweichungen zwischen den gemessenen Differenzen $(Ys - Ym)i = \Delta Yi$ und dem Mittelwert ΔYmw möglichst klein ist, dann hängt das Ergebnis von der Phasenlage der Schwingung bzw. von dem Zeitpunkt (t0) ab, von dem ab die Meßwerte bzw. ihre Differenzen ΔYi gespeichert werden. Denn wenn die Funktion ΔY (t) mit positiven Amplituden beginnt, wird der Mittelwert ΔYmw zu größeren Werten, d.h. die Gerade "nach oben" geshiftet, während bei einem Start mit negativen Amplituden der Mittelwert "nach unten" geshiftet wird. Entsprechend streut der Mittelwert, abhängig von der zufälligen Startzeit (t0) des Zeitfensters (T) für die Mittelwertbildung. Diese Streuung schlägt sich auch im Meßergebnis nieder. Zu besseren Ergebnissen kommt man dann, wenn die Meßwertdifferenzen ΔY (t) im Zuge der Mittelwertbildung mit einer Funktion gewichtet werden, die dem Inversen der abklingenden Schwingung entspricht und die semit die abklingenden Amplituden auf den gleichen Wert zieht wie die Amplituden zu Beginn der Mittelwertbildung. Für diese sogenannte gewichtete Mittelwertbildung wird als Bedingung gefordert, daß die Summe der Quadrate der Differenzen zwischen dem Meßwert ΔYi und dem gewichteten Mittelwert $\Delta \overline{Ymw}$ multipliziert mit der Gewichtungsfunktion (Gi) möglichst klein ist. Diese Bedingung ist in Gleichung (2) ausgedrückt.

$$\varepsilon = \sum_i \left[ (\Delta Yi - \Delta Ymw) \cdot Gi \right]^2 = \text{Minimum} \tag{2}$$

Bei einem Minimum ist

$$\frac{\delta \varepsilon}{\delta \Delta \overline{Ymw}} = 0 \tag{3}$$

woraus sich

$$\sum_i (2 \Delta Yi \cdot Gi^2 - 2 \Delta \overline{Ymw} \cdot Gi^2) = 0 \quad \text{und daraus}$$

$$\sum_i \Delta \text{Yi} \cdot \text{Gi}^2 = \sum_i \Delta \text{Ymw} \cdot \text{Gi}^2 \qquad\qquad (4)$$

ergibt. Aus (4) erhält man durch Umformen

$$\Delta \text{Ymw} = \frac{\sum_i \Delta \text{Yi} \cdot \text{Gi}^2}{\sum_i \text{Gi}^2} \qquad\qquad (5)$$

Hierin ist

$$\text{Gi} = e^{D\,ti}. \qquad\qquad (6)$$

Der Parameter D beschreibt das Abklingverhalten der gedämpften Schwingung.

Der so berechnete gewichtete Mittelwert $\Delta \overline{\text{Ymw}}$ streut um einen Faktor 5 weniger als der einfache Mittelwert $\Delta$Ymw.

**b) Filterung der Meßwerte und Interpolation auf den Antastzeitpunkt**

Da die Schwingungen des Portals mit dem zweiten Meßsystem im Fuß des Portals an einer Stelle erfaßt werden, die nicht identisch ist mit der Stelle an der Maschine, an der der Tastkopf befestigt ist, führt die vorstehend beschriebene Korrektur dann nicht ganz zum Erfolg, wenn das Frequenzspektrum der Schwingungen an beiden Stellen verschieden ist. Nun kann aber die Pinole (7) über ihre Führungen stärker bedämpft sein als der Portalfuß, so daß der Tastkopf (8) weniger empfindlich auf höhere Frequenzen reagiert als sie vom Meßsystem (14) am Portalfuß erfaßt werden. Um diesem Effekt entgegenzuwirken, werden die Meßwerte (Ys) des Maßstabs (14) vor der Weiterverarbeitung gespeichert und in einem digitalen Filterprozeß mit Tiefpaßcharakteristik so geglättet, daß das Frequenzverhalten etwa dem an der Stelle an der Maschine entspricht, an der der Tastkopf befestigt ist. Zur Korrektur der Phasenverschiebung durch das Tiefpaßfilter werden auch Meßwerte (Ys) mit in die Filterung einbezogen, die nach dem Antastzeitpunkt (ta) aufgenommen und gespeichert wurden. Durch eine entsprechende Einstellung der Filterparameter (Eckfrequenz, Steilheit, Phasenverschiebung) läßt sich auch für unterschiedliche Maschinen der Frequenzgang der Störschwingungen am Ort des Tastkopfs an den am Ort des Meßsystems anpassen und damit korrigieren. Die Filterparameter können beispielsweise bestimmt werden, indem mit Beschleunigungsaufnehmern am Tastkopf (8) und an der Stelle des Meßsystems (14) im Fuß (5) des Portals die Amplitude der Schwingungen in einem Frequenzbereich gemessen werden und dann die Parameter so angepaßt werden, daß das Filter das Frequenzspektrum an der einen Stelle in das Frequenzspektrum an der anderen Stelle überführt.

Da es bei der Korrektur darauf ankommt, den Meßwert (Ys) exakt zum Antastzeitpunkt (ta) zu erhalten, die digitale Filterung der Meßwerte jedoch im konstanten Maschinentakt durchgeführt wird, muß, um den exakten Meßwert zu erhalten, auf den Zeitpunkt (ta) interpoliert werden. Dies geschieht nach folgender Formel:

$$\text{Ys}(\text{ta}) = \text{Ysi}^F + \frac{(\text{Ys}(\text{ta})^F - \text{Ysi}) \cdot (\text{Ys}(i+1)^F - \text{Ysi}^F)}{\text{Ys}(i+1) - \text{Ysi}} \qquad (7)$$

Hierin bedeuten (Ysi) den ungefilterten Meßwert zum Taktzeitpunkt (i) unmittelbar vor dem Antastzeitpunkt (ta), Ys (i+1) den ungefilterten Meßwert zum Maschinentaktzeitpunkt (i+1) unmittelbar nach dem Antastzeitpunkt (ta) und die mit dem hochgestellten Index (F) bezeichneten Größen sind die jeweiligen gefilterten Meßwerte.

**c) Einfluß der Z-Koordinate**

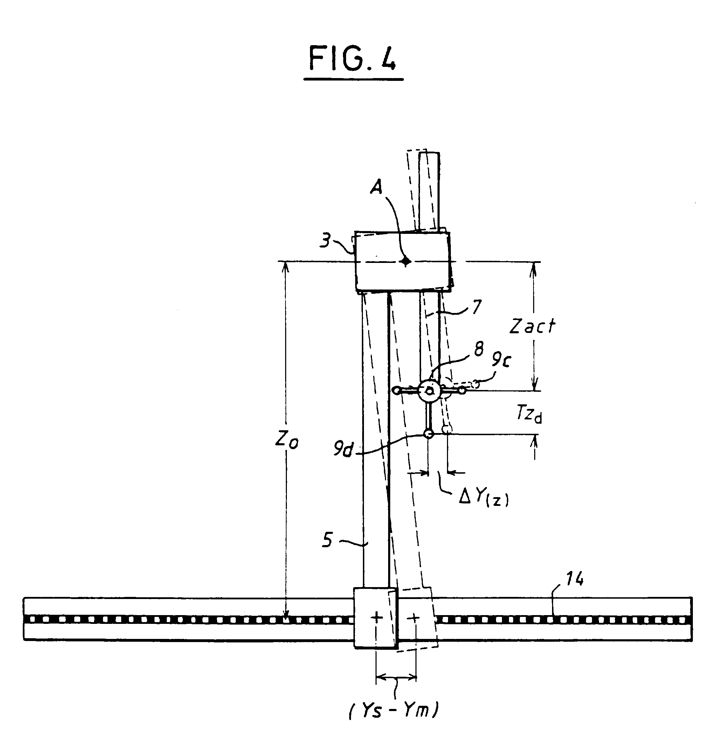

Bei der vorstehenden Betrachtung wurde bisher davon ausgegangen, daß die Schwingungen des Portals hauptsächlich Drehschwingungen des Portals um die Vertikale sind. Es hat sich jedoch gezeigt, daß zusätzlich weitere Schwingungsmoden auftreten, wobei hauptsächlich ein Schwingungsmode ins Gewicht fällt, der durch Torsion des Querträgers (3) um seine horizontale Längsachse (A) hervorgerufen wird. Dieser Schwingungsmode wirkt sich auf den Portalfuß (5) und den Tastkopf (8) insofern unterschiedlich aus, als die Schwingungsamplitude des Tastkopfs (8) von der Position des Tastkopfs (8) in der vertikalen Z-Richtung des Portals abhängt. Die geometrischen Zusammenhänge bei dieser Torsionsschwingung sind anhand von Figur 4 verdeutlicht. Dort sind mit (Z0) der Abstand zwischen dem Drehpunkt (A) dieser zweiten Schwingungsmode und der Position des Maßstabs (14) bezeichnet und mit (Zact) der Abstand des Tastkopfs (8) vom Drehpunkt (A). Danach ergibt sich für die Korrektur der Z-Abhängigkeit der Meßwerte folgende Formel:

$$\Delta\,Y9d(z) = \frac{(Zact + Tzd)\,\cdot\,\Delta Y\,(ta)}{Z0} \tag{8}$$

In dieser Formel ist (Tzd) beispielsweise die Tasterkoordinate in z für die Tastkugel (9d) am Tastkopf (8) und $\Delta Y(ta)$ ist wieder die Differenz der beiden Meßwerte (Ys) und (Ym) der beiden Maßstäbe (14) und (13).

Die Gleichung (8) hat die gleiche Struktur wie die Gleichung (1) zur Berechnung der X-Abhängigkeit des Korrekturwertes.

Es ist nun noch zu bestimmen, mit welchen Anteilen die beiden beschriebenen Schwingungsmoden auftreten und für eine vollständige Korrektur ist nach Bestimmung der Anteilsfaktoren a und b ein Korrekturfaktor

$$Y\,(x,\,z) = a\,\cdot\,\Delta Y(x) + b\,\cdot\,\Delta Y(z) \tag{9}$$

zu berechnen. Da die beiden Faktoren a und b in Gleichung 9 nun aber nicht konstant sind, sondern von der momentanen Phasenlage der beiden Schwingungsmoden zueinander abhängen, müssen sie bei jedem Antastvorgang neu bestimmt werden. Das ist aber möglich, wenn sich die beiden Schwingungsmoden in ihrer Frequenz deutlich genug unterscheiden. Denn dann lassen sich die Frequenzen durch geeignete Filter trennen und es stehen dann für die beiden Moden separate Signale des Gebers (12) für die Weiterverarbeitung und Korrekturrechnung zur Verfügung.

## d) Korrektur des Beschleunigungseinflusses

Ein weiterer, bisher nicht diskutierter Fehlereinfluß entsteht dadurch, daß aufgrund der begrenzten Steifigkeit des Portals bei sehr kurzen Antastwegen sich das Portal zum Antastzeitpunkt (ta) noch im Beschleunigungsvorgang befindet. Aufgrund der begrenzten Steifigkeit des Portals hinken das zweite Meßsystem (14) und der Tastkopf dem angetriebenen Portalfuß hinterher und der aus den Schwingungen des Portalfußes berechnete Mittelwert ist um eine Größe zu korrigieren, die in erster Näherung der mittleren Beschleunigung (amw) während der Zeit der Mittelwertbildung der Differenzen $\Delta Ymw$ der Meßwerte (Ys) und (Ym) proportional ist. Dies wird durch folgende Formel beschrieben:

$$\Delta Ymw(a) = \Delta Ymw - Ka\,\cdot\,amw \tag{10}.$$

Hierin ist Ka eine für den Maschinentyp konstante Größe.

Mit den beschriebenen Korrekturen läßt sich für ein Koordinatenmeßgerät in Leichtbauweise eine Meßunsicherheit erzielen, die bisher nur von Koordinatenmeßgeräten mit extrem steifer Struktur bzw. im Schwerpunkt des Portals angeordneten Antrieben erreicht wurde. An dieser Stelle soll noch betont werden, daß es keinesfalls erforderlich ist, alle beschriebenen Maßnahmen gleichzeitig einzusetzen. Es hängt vielmehr vom Schwingungsverhalten des jeweiligen Koordinatenmeßgerätes und vom Ausmaß der Meßunsicherheit ab, die für das Gerät zugelassen werden soll, ob und welche der zusätzlichen Korrekturmaßnahmen (a) bis (d) ergriffen werden müssen.

## Patentansprüche

1. Verfahren zur Messung der effektiven Momentanposition eines von einem Schlitten (Portal 3-5) getragenen Tastelementes (9a,b,c,d) bzw. Werkzeugs, wobei der Schlitten ein Längenmeßsystem (13) zur Messung der Position des Schlittens besitzt und ein weiteres vom ersten beabstandetes Längenmeßsystem (14) vorhanden ist, dessen Meßwerte zur Berechnung der exakten Position des Tastelemets herangezogen werden, dadurch gekennzeichnet, daß mit dem zweiten Längenmeßsystem (14) die dynamische Abweichung von der mit dem ersten Meßsystem (13) gemessenen Position ermittelt wird, derart, daß die Abweichung (Ys-Ym) des Positionsmeßwertes des zweiten Längenmeßsystems während einer Zeitspanne (ta-t0) gemessen und abgespeichert wird und aus dem zeitlichen Verlauf der gespeicherten Meßwerte der Korrekturwert für die Position des Tastelements zum Antastzeitpunkt (ta) ermittelt wird.

2. Verfahren nach Anspruch 1, wobei beide Meßsysteme (13, 14) im gleichen Takt ausgelesen werden, die Differenzen $(\Delta Yi = (Ys - Ym)i)$ der beiden Meßwerte jeweils über einen festgelegten Zeitbereich (T) hindurch gespeichert werden und der lineare Anteil des sich ergebenden Funktionsverlaufes von den Meßwerten subtrahiert wird.

3. Verfahren nach Anspruch 2, wobei die Differenzen $(\Delta Yi = (Ys - Ym)i)$ der beiden Meßwerte gebildet und mit einer das Dämpfungsverhalten der Schwingung des Schlittens charakterisierenden Funktion G(i) multipliziert d.h. gewichtet werden.

**4.** Verfahren nach einem der Ansprüche 1-3, wobei die Positionsmeßwerte (Ys) des anderen Meßsystems (14) einer Filterung unterzogen werden, die das Frequenzspektrum der Schwingung des Schlittens am Orte des Meßsystems (14) dem Frequenzspektrum des Schlittens am Orte des Tastelements (9) angleicht.

**5.** Verfahren nach Anspruch 1, wobei die Zeitspanne (ta-t0) zu einem Zeitpunkt (ta) beginnt, an dem der exakte Positionsmeßwert (Ym + $\Delta$ Y(ta)) ermittelt werden muß.

**6.** Verfahren nach einem der Ansprüche 1-5, wobei die im Maschinentakt aufgenommenen Positionsmeßwerte (Ys) des anderen Meßsystems (14) auf den Zeitpunkt (ta) interpoliert werden, an dem der exakte Positionsmeßwert (Ym + $\Delta$Y(ta)) ermittelt werden muß.

**7.** Verfahren nach einem der Ansprüche 1-6, wobei die Position des Tastelements (9) in beiden Meßrichtungen (x und z) senkrecht zur Meßrichtung der beiden Längenmeßsysteme in die Berechnung der effektiven Momentanposition einbezogen wird.

**8.** Verfahren nach einem der Ansprüche 1-7, wobei der Einfluß der Verformung des Schlittens unter dem Einfluß von Beschleunigungskräften in der festgelegten Zeitspanne (ta-t0) berücksichtigt wird, in dem die Meßwerte (Ys, Ym) gespeichert werden.

**9.** Maschine mit zwei parallel angeordneten Längenmeßsystemen (13,14) zur Messung der Verschiebung eines seiner Schlitten (Portal 3-5), wobei die beiden Längenmeßsysteme (13,14) an eine Einrichtung (16) angeschlossen sind, die aus den Signalen des einen Längenmeßsystems (13) einen Positionsmeßwert (Ym) und unter Einbeziehung des zweiten Meßwerts (Ys) des anderen Meßsystems (14) einen Differenzmeßwert (Ys-Ym) bildet, sowie mit einem Rechner, der aus dem Meßwert (Ym) und dem Differenzmeßwert (Ys-Ym) die effektive Momentanposition ( $\Delta$ Y9a, $\Delta$ Y9d(z)) eines von dem Schlitten (Portal 3-5) getragenen Tastelementes (9a,b,c,d) bzw. Werkzeugs berechnet, dadurch gekennzeichnet, daß der Differenzmeßwert (Ys-Ym) ein dynamischer Meßwert ist, der die momentane Abweichung des anderen Meßsystems (14) von der Position des einen Meßsystems (13) charakterisiert, und daß Mittel zur Speicherung der Differenzmeßwerte (Ys-Ym) zumindest während einer kurzen Zeitspanne (t0-ta) sowie Mittel zur Berechnung der effektiven Momentanposition zum Antastzeitpunkt (t0) aus dem zeitlichen Verlauf der gespeicherten Differenzmeßwerte (Ys-Ym) vorhanden sind.

**10.** Maschine nach Anspruch 9, wobei sie eine Koordinatenmeßmaschine, insbesondere vom Portaltyp ist.

**11.** Maschine nach Anspruch 9, wobei die Längenmeßsysteme Maßstäbe (13, 14) enthalten.

**12.** Maschine nach einem der Ansprüche 9-11, wobei die beiden Längenmeßsysteme unterschiedlichen Genauigkeitsklassen angehören.

**13.** Maschine nach Anspruch 12, wobei einer der beiden Maßstäbe ein temperaturinvarianter Zerodurmaßstab (13) ist und der andere Maßstab (14) aus Material mit nicht zu vernachlässigender thermischer Ausdehnung besteht.

**14.** Maschine nach Anspruch 12, wobei eines der beiden Meßsysteme einen Maßstab enthält und das andere ein interferometrisches Längenmeßsystem ist.

**15.** Maschine nach Anspruch 12, wobei beide Meßsysteme Interferometer sind und allein eines der beiden Interferometer eine Einrichtung zur Kompensation von Umweltparametern bzw. zur hochgenauen Stabilisierung der Wellenlänge des verwendeten Meßlichts besitzt.


**Claims**

**1.** A method of measuring the effective instantaneous position of a probe element (9a, b, c, d) or tool borne by a carriage (portal 3-5), the carriage being provided with a length measurement system (13) for measuring the position of said carriage, and, distant to said first length measurement system being provided a further length measurement system (14), the measurement values of which are used for calculating the exact position of said probe element, characterized by the fact, that the dynamic deviation from the position determined with the first measurement system (13) is determined in such a manner, that the deviation (Ys-Ym) of the position measurement values of said further length measurement system is measured during a time period (ta-t0) and is stored, and that the correction value for the position of said probe element at the moment (ta) of probing is determined from the course of measurement values stored versus time.

2. A method according to claim 1 in which both measurement systems (13, 14) are read in the same cadence, the differences ($\Delta$ Yi=(Ys-Ym)i) of the two measurement values being stored in each case over a time interval (T) and the linear part of the resultant function being subtracted from the measurement values.

3. A method according to claim 2, in which the differences [$\Delta$Yi = (Ys-Ym)i] of the two measurement values are formed and multiplied (weighted) with a function G(i) which characterizes the damping behavior of the oscillation of the carriage.

4. A method according to one of claims 1-3, in which the position-measurement values (Ys) of the further measurement system (14) are subjected to a filtering process which adapts the frequency spectrum of the oscillation of the carriage at the location of the measurement (14) to the frequency spectrum of the carriage at the location of the probe element (9).

5. A method according to claim 1 in which the time period (ta-t0) commences at a time (ta) when the exact position measurement value (Ym + $\Delta$ Y(ta)) must be determined.

6. A method according to one of claims 1-5, in which position-measurement values (Ys) of the further measurement system (14) which are recorded in the machine clock frequency are interpolated to the time (ta) at which the exact position-measurement value (Ym + $\Delta$ Y(ta)) must be determined.

7. A method according to one of claims 1-6, in which the position of the probe element (9) in both measurement directions (x and z) perpendicular to the direction of measurement of said two length-measurement systems is included in the calculation of the effective instantaneous position.

8. A method according to one of claims 1-7, in which the influence of the deformation of the carriage under the influence of acceleration forces is taken into account within the established time interval (T) within which the measurement values (Ys, Ym) are stored.

9. A machine having two length measurement systems (13, 14) arranged in parallel for measuring the displacement of one of its carriages (portal 3-5), the two length measurement systems (13, 14) being connected to a device (16) which forms a position measurement value (Ym) from the signals of one of both length measurement systems and, by incorporating the second measurement value (Ys) of the second length measurement system (14), forms a difference masurement value (Ys-Ym), which machine comprises a computer for calculating the effective instanta-neous position ($\Delta$ Y9a, $\Delta$ Y9d(z)) of a probe element (9a, b, c, d) or tool borne by a carriage (portal 3-5); characterized by the fact that the difference measurement value (Ys-Ym) is a dynamic measurement value characterizing the instantaneous deviation of the other measurement system from the position of the one (13) of both measuring systems, and further characterized in that means are provided for storing of said difference measurement values (Ys-Ym) at least during a short time period (t0-ta), and further characterized by means for calculating the effectice instantaneous position at the moment of probing from the course of measurement values stored versus time.

10. A machine according to claim 9, it being a coordinate measurement machine, particularly of the portal type.

11. A machine according to claim 9, in which the length measurement systems contain scales (13, 14).

12. A machine according to one of claims 9-11, in which both length measuring systems belong to different classes of precision.

13. A machine according to claim 12 in which one of the two scales is a temperature-invariant Zerodur scale (13) and the other scale (14) consists of material with non-negligible thermal expansion.

14. A machine according to claim 12, in which one of the two measurement systems contains a scale and the other measurement system is an interferometric length measurement system.

15. A machine according to claim 12, in which both measurement systems are interferometers and only one of the two interferometers has a device for compensating for environmental parameters or for the highly precise stabilizing of the wavelength of the measurement light used.

## Revendications

1.  Procédé de mesure de la position effective, à un moment donné, d'un palpeur (9a,b,c,d) ou d'un outil porté par un chariot (portique 3 à 5), où ledit chariot est doté d'un système longimétrique (13) pour la mesure de sa position et où un autre système longimétrique (14) écarté du premier est disponible, dont les valeurs mesurées sont utilisées pour le calcul de la position exacte du palpeur, caractérisé en ce que le second système longimétrique (14) sert à déterminer l'écartement dynamique par rapport à la position relevée avec le premier système longimétrique (13), de sorte que l'écart (Ys-Ym) de la valeur de position relevée par le second système longimétrique est mesuré et enregistré pendant un laps de temps (ta-t0) et que la valeur de correction de la position du palpeur à l'instant de palpage (ta) est déduite de la variation dans le temps des valeurs mesurées mises en mémoire.

2.  Procédé selon la revendication 1, où les deux systèmes de mesure (13, 14) sont lus selon le même cycle, où les différences ($\Delta Yi = (Ys - Ym)i$) entre les deux valeurs mesurées sont mises en mémoire respectivement pendant un laps de temps déterminé (T) et où la part linéaire de la variation ainsi obtenue de la fonction est soustraite des valeurs mesurées.

3.  Procédé selon la revendication 2, où les différences ($\Delta Yi = (Ys - Ym)i$) entre les deux valeurs mesurées sont formées et pondérées, c.à.d. multipliées par une fonction G(i) caractérisant le comportement d'atténuation de l'oscillation du chariot.

4.  Procédé selon l'une des revendications 1 à 3, où les valeurs de position (Ys) relevées par l'autre système de mesure (14) sont soumises à un filtrage qui adapte le spectre de fréquences de l'oscillation que le chariot décrit au niveau du système de mesure (14) au spectre de fréquences du chariot au niveau du palpeur (9).

5.  Procédé selon la revendication 1, où le laps de temps (ta-t0) commence à un instant (ta), auquel doit être déterminée la valeur de position exacte ($Ym + \Delta Y(ta)$).

6.  Procédé selon l'une des revendications 1 à 5, où les valeurs de position (Ys) relevées selon le cycle machine par l'autre système de mesure (14) sont interpolées pour l'instant (ta), auquel doit être déterminée la valeur de position exacte ($Ym + \Delta Y(ta)$).

7.  Procédé selon l'une des revendications 1 à 6, où la position du palpeur (9) dans les deux axes de mesure (x et z) perpendiculaires à l'axe de mesure des deux systèmes longimétriques entrent dans le calcul de la position momentanée effective.

8.  Procédé selon l'une des revendications 1 à 7, où il est tenu compte de l'influence exercée par la déformation du chariot sous l'impact des forces d'accélération pendant le laps de temps déterminé (ta-t0), au cours duquel sont enregistrées les valeurs mesurées (Ys, Ym).

9.  Machine dotée de deux systèmes longimétriques (13, 14) disposés parallèlement l'un à l'autre et servant à mesurer le déplacement de l'un de ses chariots (portique 3 à 5), où les deux systèmes longimétriques (13, 14) sont connectés à un dispositif (16) formant une valeur de position (Ym) à partir des signaux fournis par l'un des systèmes longimétriques (13) et une valeur différentielle (Ys-Ym) par l'introduction de la seconde valeur (Ys) mesurée par l'autre système de mesure (14), ainsi qu'à un ordinateur qui calcule la position effective à un moment donné ($\Delta Y9a$, $\Delta Y9d$ (z)) d'un palpeur (9a,b,c,d) ou d'un outil porté par le chariot (portique 3 à 5) à partir de ladite valeur mesurée (Ym) et de ladite valeur différentielle (Ys-Ym), caractérisé en ce que la valeur différentielle (Ys-Ym) est une valeur dynamique caractérisant l'écart momentané du second système de mesure (14) de la position du premier système de mesure (13), et en ce qu'on dispose de moyens de stockage des valeurs différentielles (Ys-Ym), au moins pendant un bref laps de temps (t0-ta), ainsi que de moyens pour le calcul de la position momentanée effective à l'instant de palpage (t0) à partir de la variation dans le temps des valeurs différentielles (Ys-Ym) mises en mémoire.

10. Machine selon la revendication 9, où il s'agit d'une machine de mesure de coordonnées, de type à portique notamment.

11. Machine selon la revendication 9, où les systèmes longimétriques comprennent des échelles (13, 14).

12. Machine selon l'une des revendications 9 à 11, où les deux systèmes longimétriques appartiennent à des catégories de précision différentes.

13. Machine selon la revendication 12, où l'une des deux échelles est une règle en Zerodur thermostable (13) et où l'autre échelle (14) est faite d'un matériau présentant une dilatation thermique non négligeable.

14. Machine selon la revendication 12, où l'un des deux systèmes de mesure comprend une échelle et où l'autre est un système longimétrique interférométrique.

15. Machine selon la revendication 12, où les deux systèmes de mesure sont des interféromètres et où seul l'un des interféromètres possède un dispositif pour la compensation de paramètres environnementaux ou pour la stabilisation hautement précise de la longueur d'onde de la lumière de mesure utilisée.

FIG.1

# FIG. 2

## FIG. 3a

## FIG. 3b

FIG. 3c

# FIG. 4